# EUROPEAN PATENT SPECIFICATION

(11) **EP 3 319 292 B1**
(45) Date of publication and mention of the grant of the patent: **26.08.2020**
(21) Application number: 16817193.2
(22) Date of filing: 23.06.2016
(51) Int. Cl.: H04L 29/06, G06F 21/32

(54) **METHODS, CLIENT AND SERVER FOR CHECKING SECURITY BASED ON BIOMETRIC FEATURES**
VERFAHREN, CLIENT UND SERVER ZUR ÜBERPRÜFUNG DER SICHERHEIT BASIEREND AUF BIOMETRISCHEN MERKMALEN
PROCÉDÉS, CLIENT ET SERVEUR POUR VÉRIFIER LA SÉCURITÉ SUR BASE DE CARACTÉRISTIQUES BIOMÉTRIQUES

(30) Priority: 02.07.2015 CN 201510394393
(43) Date of publication of application: 09.05.2018
(73) Proprietor: Alibaba Group Holding Limited, Grand Cayman (KY)
(72) Inventor: LIN, Junsui, Hangzhou 310099 (CN)
(74) Representative: Conroy, John
(86) International application number: PCT/CN2016/086868
(87) International publication number: WO 2017/000829

(56) References cited:
- CN-A- 101 330 386
- CN-A- 101 958 792
- CN-A- 102 916 968
- CN-A- 103 368 745
- US-A1- 2008 172 725
- US-A1- 2010 223 663
- US-A1- 2011 145 904
- US-A1- 2014 337 635

## Description

### Technical Field

The present invention relates to the field of identity authentication technologies, and in particular, to a security verification method based on a biometric feature, a client terminal, and a server for use in an identity authentication process.

### Background

A password needs to be input in a traditional password verification process. Every time the password is input, there is a leakage risk, for example, a keylogger Trojan, a physical peep, and the like. Because a fingerprint has such features as high stability, individual uniqueness, and high algorithm accuracy, many devices begin to use a fingerprint verification fonction in recent years. For example, online payment is implemented through fingerprint verification, which can improve user experience and enhance payment security.

In the prior art, in an online fingerprint verification process, a client terminal sends fingerprint data (a fingerprint image or fingerprint characteristic data) of a user to a server terminal. The server terminal compares original fingerprint data of the user with the received fingerprint data, thus completing verification. Because the fingerprint data needs to be transmitted to the server terminal, a risk of leaking the fingerprint data exists in an upload
process. The fingerprint data is private data, and therefore the user may not agree to upload the fingerprint data. In addition, leakage of the fingerprint data may cause a reputational risk. Even if the user agrees to upload the fingerprint data, network traffic needs to be consumed during data upload. The server terminal also needs to compare the fingerprint data, thus consuming additional computing resources and storage resources.

US 2010/223663 A1 discloses an authentication server device, a terminal device, an authentication system, and an authentication method.

US 2008/172725 A1 discloses a system, apparatus, and program for biometric authentication.

### Summary

The present invention is defined by the claims. Objectives of the present invention are to provide a security verification method based on a biometric feature, a client terminal, and a server, so as to avoid the foregoing technical problems of network traffic consumption and a risk of leaking personal fingerprint data in a verification process in the prior art, and further enhance security.

To achieve the foregoing objectives, the technical solution of the present invention is as follows:
A security verification method based on a biometric feature is performed by a client terminal (device) in an identity authentication system, where the identity authentication system further includes a server terminal, the client terminal saves an enable record, and the enable record includes a biometric feature template ID which is used for biometric feature verification and is acquired in a process of enabling the biometric feature verification; and the security verification method includes:
sending an authentication request to the server terminal, and receiving an authentication request reply message comprising a user ID returned by the server terminal; and
receiving a biometric feature input by a user, acquiring a biometric feature template ID corresponding to the biometric feature, comprising identifying, from stored biometric feature templates, a biometric feature template that corresponds to the received biometric feature input by the user and obtaining an ID for the identified biometric feature template, searching for a corresponding saved enable record according to the user ID , and comparing the acquired biometric feature template ID with the biometric feature template ID in the corresponding saved enable record, generating an authentication response message including the acquired biometric feature template ID and user ID if the two biometric feature template IDs are consistent, and sending the authentication response message to the server terminal, so that the server terminal receives the authentication response message, obtains the user ID therein, searches for a user record according to the user ID and performs verification.

The process of enabling the biometric feature verification includes:
sending an enable request for enabling the biometric feature verification to the server terminal, and receiving an enable request reply message returned by the server terminal;
receiving the biometric feature used for verification and input by the user, acquiring the biometric feature template ID corresponding to the biometric feature used for verification, and
generating and saving the enable record; and generating an enable response message including the biometric feature template ID, and sending the enable response message to the server terminal, so that the server terminal receives
the enable response message, acquires the biometric feature template ID included m the message, and generates and saves a user record.

Further, the server terminal signs the authentication request reply message or the enable request reply message by using an agreed first private key, and after the client terminal receives the authentication request reply message, the method further includes:
verifying the received authentication request reply message by using an agreed first public key, where a subsequent response is made only when the verification succeeds, otherwise an error is reported; and
after the client terminal receives the enable request reply message, the method further includes:
   verifying the received enable request reply message by using the agreed first public key, where a subsequent response is made only when the verification succeeds, otherwise an error is reported.

This step can further strengthen security in the enable process, and avoid counterfeiting of the enable process.

Further, the enable request reply message carries a challenge value, and the process of enabling the biometric feature verification further includes:
generating a user public and private key pair including a user private key and a user public key, and saving the user private key; and
selecting a signature algorithm according to the challenge value in the enable request reply message, and signing the generated enable response message by using the selected signature algorithm and an agreed second private key and then sending the signed enable response message to the server terminal, where the enable response message includes the user public key, so that the server terminal receives the enable response message and verifies the enable response
message by using the agreed second public key, the user public key being saved in the server terminal.

Further, the authentication request reply message carries a challenge value, and the security verification method further includes:
selecting a signature algorithm according to the challenge value, and signing the authentication response message by using the selected signature algorithm and the user private key, so that the server terminal also selects a signature algorithm according to the challenge value
after receiving the authentication response message and verifies the authentication response message by using the signature algorithm and the user public key.

A user key pair is generated in the process of enabling biometric feature verification, and in the authentication process, verification is performed by using the selected signature algorithm and the user key pair, thus strengthening security and avoiding a replay attack from a counterfeit message.

Further, the enable request reply message further includes a user ID, and after the client terminal receives the enable request reply message, the method further includes:
saving the user ID in the enable record, where the enable response message generated by the client temlinal further includes the user ID, so that after receiving the enable response message,
the server terminal acquires the user ID therein and saves the user ID in the user record.

The enable response message further includes a client terminal device ID, so that after receiving the enable request reply message, the server terminal acquires the device ID therein and saves the device ID in the user record.

The authentication response message further includes the client terminal device ID, so that after receiving the authentication response message, the server terminal acquires the device ID therein and searches for the corresponding user record according to the device ID.

By using the foregoing steps, a situation in which one terminal device supports multiple users
or one user has multiple terminal devices can be supported. A corresponding enable record or a user record is searched for according to a user ID or a device ID, so as to carry out comparison and verification.

The present invention further provides a security verification method based on a biometric feature. The method is applied to a server terminal in an identity authentication system, where the
identity authentication system further includes a client terminal, the server terminal saves a user record, and the user record includes a biometric feature template ID which is used for biometric feature verification and is acquired in a process of enabling the biometric feature verification. The security verification method includes:
receiving an authentication request from the client terminal, and sending an authentication
   request reply message to the client terminal, wherein the authentication request reply message comprises a user ID;
receiving an authentication response message from the client terminal, where the authentication response message includes a biometric feature template ID and the user ID, obtaining the user ID from the authentication response message; searching for a corresponding user record according to the user ID; and
performing verification by comparing the biometric feature template ID in the authentication response message with the biometric feature template ID in the saved user record, where the verification succeeds if the two biometric feature template ID in the authentication response message and the biometric feature template ID in the corresponding user record are consistent, otherwise an error is reported.

The process of enabling the biometric feature verification includes:
receiving an enable request for enabling the biometric feature verification from the client terminal, and sending an enable request reply message to the client terminal, so that the client terminal acquires, according to a biometric feature used for verification and input by a user, a biometric feature template ID corresponding to the biometric feature used for verification, and generates and saves an enable record; and
receiving an enable response message from the client terminal, acquiring the biometric feature template ID included in the enable response message, and generating and saving the user record.

Further, the security verification method further includes:
signing the authentication request reply message or the enable request reply message by using an agreed first private key, so that the client terminal verifies the received authentication request reply message by using an agreed first public key, where a subsequent response is made only when the verification succeeds, otherwise an error is reported; or the client terminal verifies the received enable request reply message by using an agreed first public key, where a subsequent
response is made only when the verification succeeds, otherwise an error is reported. This step can further strengthen security in the enable process and avoid counterfeiting of the enable process.

Further, the enable request reply message carries a challenge value; the client terminal generates a user public and private key pair including a user private key and a user public key and saves the user private key; and the process of enabling the biometric feature verification further includes:
receiving the enable response message signed by the client terminal by using a selected signature algorithm and an agreed second private key, where the signature algorithm is selected by the client terminal according to the challenge value in the enable request reply message, and
the enable response message includes a user public key; and also selecting a signature algorithm according to the challenge value, and verifying the enable response message by using a second public key, the user public key being saved in the server terminal.

Further, the security verification method further includes:
receiving the authentication response message signed by the client terminal by using a selected signature algorithm and the user private key, where the signature algorithm is selected by the client terminal according to the challenge value in the authentication request reply message; and also selecting a signature algorithm according to the challenge value, and verifying
a signature on the authentication response message by using the signature algorithm and the user public key.

A user key pair is generated in the process of enabling biometric feature verification, and in the authentication process, verification is performed by using the selected signature algorithm and the user key pair, thus strengthening security and avoiding a replay attack from a counterfeit message.

The enable response message further includes a client terminal device ID, and after the server terminal receives the enable response message, the method further includes:
acquiring the device ID from the enable response message, and saving the device ID in the user record.

The authentication request reply message further includes the user ID, so that the client terminal searches for the corresponding enable record according to the user ID, and compares the acquired biometric feature template ID with the biometric feature template ID in the found
enable record; the authentication response message generated by the client terminal further includes the user ID;
and after the server terminal receives the authentication response message, the method further includes:
acquiring the user ID from the authentication response message, and searching for the corresponding user record according to the user ID.

The authentication response message further includes the client terminal device ID, and after the server terminal receives the authentication response message, the method further includes:
acquiring the device ID from the authentication response message, and searching for the corresponding user record according to the device ID.

The present invention further provides a client terminal, which is applied to an identity authentication system, where the identity authentication system further includes a server terminal, the client terminal saves an enable record, and the enable record includes a biometric
feature template ID which is used for biometric feature verification and is acquired in a process of enabling the biometric feature verification; and the client terminal includes:
a request module configured to send an authentication request to the server terminal, and receive an authentication request reply message returned by the server terminal; and
a response module configured to receive a biometric feature input by a user, acquire a biometric feature template ID corresponding to the biometric feature, compare the acquired biometric feature template ID with the biometric feature template ID in the saved enable record, generate an authentication
response message including the acquired biometric feature template ID if the two biometric feature template IDs are consistent, and send the authentication response message
to the server terminal, so that the server terminal receives the authentication response message and performs verification.

Further, the request module is further configured to send an enable request for enabling the biometric feature verification to the server terminal, and receive an enable request reply message returned by the server terminal; the response module is further configured to receive the biometric feature used for verification and input by the user, acquire the biometric feature
template ID corresponding to the biometric feature used for verification, generate and save the enable record, generate an enable response message including the biometric feature template ID, and send the enable response message to the server terminal, so that the server terminal receives the enable response message, acquires the biometric feature template ID included in the message, and generates and saves a user record.

Further, the server terminal signs the authentication request reply message or the enable request reply message by using an agreed first private key, and after receiving the authentication request reply
message, the request module is further configured to verify the received authentication request reply message by using an agreed first public key, where a subsequent response is made only when the verification succeeds, otherwise an error is reported; and after receiving the enable request reply message, the request module is further configured to verify the received enable request reply message by using the agreed first public key, where a subsequent
response is made only when the verification succeeds, otherwise an error is reported.

In the present invention, the enable request reply message carries a challenge value, and the response module is further configured to generate a user public and private key pair including a user private key and a user public key, and save the user private key; and select a signature algorithm according to the challenge value in the enable request reply message, and sign the
generated enable response message by using the selected signature algorithm and an agreed second private key and then send the signed enable response message to the server terminal, where the enable response message includes the user public key, so that the server terminal receives the enable response message and verifies the enable response message by using the agreed second public key, the user public key being saved in the server terminal.

Further, the authentication request reply message carries a challenge value, and the response module is further configured to select a signature algorithm according to the challenge value, and sign the authentication response message by using the selected signature algorithm and the user private key, so that the server terminal also selects a signature algorithm according to the challenge value after receiving the authentication response message and verifies the
authentication response message by using the signature algorithm and the user public key.

The present invention further provides a server which is applied to an identity authentication system, where the identity authentication system further includes a client terminal, the server saves a user record, and the user record includes a biometric feature template ID which is used for biometric feature verification and is acquired in a process of enabling the biometric feature
verification; and the serverincludes:
a reply module configured to receive an authentication request from the client terminal, and send an authentication request reply message to the client terminal; and
a verification module configured to receive an authentication response message from the client terminal, where the authentication response message includes a biometric feature template ID; and perform verification by comparing the biometric feature template ID in the authentication response message with the biometric feature template ID in the saved user record,
where the verification succeeds if the two biometric feature template IDs are consistent, otherwise an error is reported.

Further, the reply module is further configured to receive an enable request for enabling the biometric feature verification from the client terminal, and send an enable request reply message to the client terminal, so that the client terminal acquires, according to a biometric feature used
for verification and input by a user, a biometric feature template ID corresponding to the biometric feature used for verification, and generates and saves an enable record; and the verification module is further configured to receive an enable response message from the client terminal, acquire the biometric feature template ID included in the enable response message, and generate and save the user record.

Further, the reply module is further configured to sign the authentication request reply message or the enable request reply message by using an agreed first private key, so that the client terminal verifies the received authentication request reply message by using an agreed first public key, where a subsequent response is made only when the verification succeeds, otherwise an error is reported; or the client terminal verifies the received enable request reply message by
using an agreed first public key, where a subsequent response is made only when the verification succeeds, otherwise an error is reported.

In the present invention, the enable request reply message carries a challenge value; the client terminal generates a user public and private key pair including a user private key and a user public key and saves the user private key; and the verification module is further configured to
receive the enable response message signed by the client terminal by using a selected signature algorithm and an agreed second private key, where the signature algorithm is selected by the client terminal according to the challenge value in the enable request reply message, and the
enable response message includes a user public key; and also select a signature algorithm according to the challenge value, verify the enable response message by using a second public key, and save the user public key.

Further, the verification module is further configured to receive the authentication response message signed by the client terminal by using a selected signature algorithm and the user private key, where the signature algorithm is selected by the client terminal according to the challenge value in the authentication request reply message; and also select a signature algorithm according to the challenge value and verify the signature on the authentication response message by using the signature algorithm and the user public key.

A security verification method based on a biometric feature, a client terminal, and a server of the present invention implement that the client terminal performs fingerprint verification, fingerprint template storage, and a verification process in a trusted execution environment (TEE). Such an implementation is completely isolated from common hardware, thus avoiding a privacy leakage risk. Further, network traffic is reduced in a fingerprint data transmission process. In
addition, the server terminal only compares fingerprint template IDs, thus decreasing computation overheads and storage overheads of the server terminal. A specific fingerprint template is bound when fingerprint verification is enabled. A new fingerprint template added after the verification is enabled cannot be used for verification, thus enhancing security. By using a selected signature algorithm, the security is further strengthened in the verification process, and
a network attack from a counterfeit message is avoided.

### Brief Description of the Drawings

FIG. 1 is a flowchart of a process of enabling biometric feature verification according to the present invention;
FIG. 2 is a flowchart of a security verification method based on a biometric feature according to the present invention;
FIG. 3 is a schematic structural diagram of a client terminal according to the present invention; and
FIG. 4 is a schematic structural diagram of a server according to the present invention.

### Detailed Description

The technical solution of the present invention is further described in detail below with reference to the accompanying drawings and the embodiments, and the following embodiments do not impose a limitation on the present invention.

For verification based on a biometric feature, it is increasingly common to perform identity authentication by technical means such as fingerprint recognition, voice recognition, face recognition, and iris recognition. Such biometric feature verification is widely applied, for example, in an access control system or Internet payment. This embodiment uses fingerprint
verification in Internet payment as an example to describe in detail a security verification method based on a biometric feature according to the present invention.

Different from online fingerprint verification, the fingerprint verification in Internet payment of this embodiment completes fingerprint comparison at a client terminal of a user, and further verifies a result at a server terminal. Such dual protection ensures effectiveness of fingerprint
verification. The client terminal in this embodiment is generally an application program, and is installed on a mobile terminal, a computer, or another intelligent device of the user. Some client terminals are directly webpage-combined fingerprint scanning terminals which are provided by service providers.

A fingerprint verification method of this embodiment includes a fingerprint verification enabling process and a verification process, which are separately described below.

### Embodiment 1: Fingerprint verification enabling process

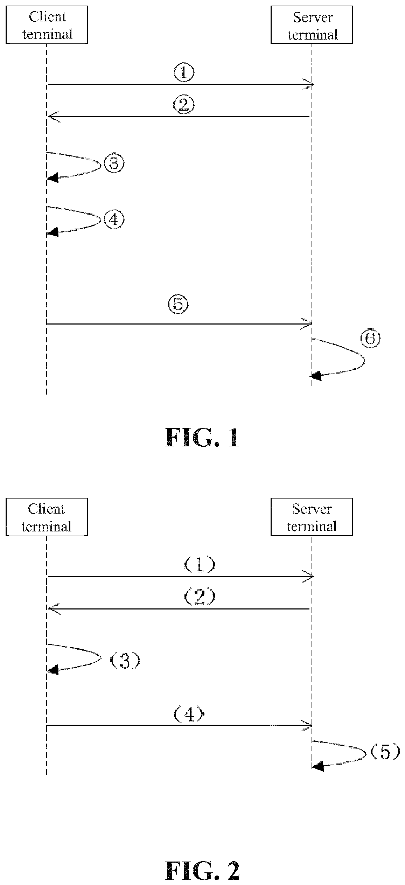

For fingerprint verification in Internet payment, a fingerprint verification function needs to be first enabled. As shown in FIG. 1, the process includes the following steps:
CD A client terminal sends an enable request for enabling fingerprint verification to a server terminal.

When enabling the fingerprint verification function, a user first initiates the enable request to the server terminal.
② After receiving the enable request for enabling fingerprint verification, the server terminal sends an enable request reply message to the client terminal.
③ After receiving the enable request reply message, the client terminal receives a fingerprint image used for verification and input by the user, and acquires a fingerprint template ID corresponding to the fingerprint image used for verification.

Before the fingerprint verification is enabled, a client terminal device of the user stores multiple fingerprint templates entered by the user. The fingerprint template is a fingerprint feature extracted from a fingerprint image. When the fingerprint verification function is enabled, the user inputs, to the client terminal, a fingerprint image of a finger for fingerprint verification. For example, the user puts the finger on a fingerprint scanning device. The fingerprint image is acquired, and a fingerprint feature is extracted. Then, the fingerprint feature is compared with the fingerprint templates stored in the client terminal, to acquire a corresponding fingerprint template ID.

If the client terminal device of the user does not store any fingerprint template of the user before the fingerprint verification is enabled, the fingerprint image used by the user for fingerprint verification may also be entered directly herein, to generate a fingerprint template and a fingerprint template ID, and acquire the fingerprint template ID.

④ The client terminal saves an enable record, where the enable record includes the fingerprint template ID.

The enable record is a record saved in the client terminal device, and includes a fingerprint template ID used by the user for fingerprint verification during enabling of the fingerprint verification. The fingerprint template ID is compared with an input fingerprint template ID in a subsequent fingerprint verification step, to judge whether the input fingerprint template ID is consistent with the original fingerprint template ID used during enabling of the verification. That is, only the fingerprint template ID input during enabling of the verification can be used in the subsequent verification. The fingerprint template ID used for verification cannot be modified by cracking a power-on password of the user. Thus, even when the client terminal device of the user is lost, the user does not need to worry that the password is cracked and the device is fraudulently used by an illegal person.

⑤ The client terminal generates an enable response message including the fingerprint template ID in the enable record, and sends the enable response message to the server terminal.

In this embodiment, the fingerprint template ID in the enable record is carried in the enable response message and sent to the server terminal, so that the server terminal saves the information.

⑥ The server terminal receives the enable response message, and generates and saves a user record, where the user record includes the fingerprint template ID of the user.

In this way, after receiving the enable response message sent by the client terminal, the server terminal generates and saves the user record. The user record includes the fingerprint template ID of the user. The server terminal saves the user record, so as to verify the result in the subsequent verification process.

Preferably, in order to further enhance the security in the enable process, step ② of this embodiment further includes the following substep:
encrypting, by the server terminal, the enable request reply message by using a first private key.

In this way, after receiving the enable request reply message, the client terminal needs to verify the enable request reply message. Generally speaking, a server public and private key pair including a first public key and a first private key is agreed upon by the client terminal and the server terminal. The first public key is saved in the client terminal and the first private key is saved in the server terminal. The server terminal encrypts the enable request reply message by using the first private key and then sends the encrypted message to the client terminal. The client terminal decrypts the message by using the first public key and performs verification. Subsequent steps are performed if the verification succeeds, otherwise an error is reported. An encryption algorithm used herein may be a symmetric algorithm, an asymmetric algorithm, an abstract algorithm, or the like.

Thus, step ③ of this embodiment further includes the following substep:
verifying, by the client terminal, the enable request reply message by using the first public key, where a subsequent response is made only when the verification succeeds, otherwise an error is reported.

That is, after receiving the enable request reply message, the client terminal decrypts the message by using the first public key and performs verification. Subsequent steps are performed if the verification succeeds, otherwise an error is reported. It should be noted that, in a general case in which the security requirement is not high, the process of verifying the enable request reply message may also be omitted. The first public key and the first private key remain unchanged for any client terminal.

In this embodiment, if multiple users register with the client terminal, for example, if multiple users share one client terminal, the enable record needs to include a user ID, so as to distinguish between enable records of different users. However, because it is easy for a hacker to attack the client terminal to tamper a user ID, the enable request reply message in this embodiment includes a user ID. The enable request reply message is encrypted and signed, thus effectively preventing the enable request reply message from being tampered in a transmission process. The enable request reply message includes the user ID and the enable record is generated by using the user ID, thus effectively ensuring that the enable record records a correct user ID and a corresponding fingerprint template ID. Therefore, accuracy of verification in subsequent steps is ensured.

Therefore, the enable request reply message of this embodiment further includes the user ID, and the enable record includes the user ID and the fingerprint template ID. The enable response message also includes the user ID and the fingerprint template ID. Therefore, after receiving the enable response message, the server terminal acquires the user ID and the fingerprint template ID, and generates and saves the user record. The user record includes the user ID and the fingerprint template ID.

In this way, after the user logs on to the client terminal by using the user ID, a corresponding enable record is searched for according to the user ID. Matching between the user ID and the fingerprint template ID in the enable record can be performed. Sharing of one client terminal by multiple users can be supported. Likewise, at the server terminal, a user record is also searched for according to the user ID, and verification is performed by comparing corresponding fingerprint template IDs.

Further, when the user has multiple terminal devices, in order to distinguish between different terminal devices, the enable response message further includes a device ID, to further distinguish between different devices of the user. Therefore, the server terminal stores a user record including a user ID, a device ID, and a fingerprint template ID. When the user has multiple devices, the server terminal saves different user records corresponding to the different devices of the user, to implement recognition and verification. Likewise, when the user uses different terminal devices, based on the foregoing steps of the present invention, the different terminal devices of the user can be distinguished from one another, to perform verification. That is, during comparison, a corresponding enable record and user record are further searched for according to the device ID, and verification is performed by comparing the fingerprint template ID with those in the matched enable record and user record.

Preferably, in order to further avoid a replay attack in the verification process, in the enable process of this embodiment, a challenge-response manner is further used to enhance the security. That is, in step ②, the enable request reply message further carries a challenge value. The challenge-response manner is one of frequently used methods in identity authentication. Therefore, after receiving the enable request from the client terminal, the server terminal generates a challenge value, and sends the enable request reply message carrying the challenge value to the client terminal. In a subsequent step, verification is performed by verifying a response value. The challenge value is generated in an identity authentication process by using a random algorithm. For generation of a random number, a pseudo-random algorithm and a strong random algorithm are provided in the prior art. In this embodiment, the strong random algorithm is used, and acquired random numbers are distributed more evenly. After receiving the enable request reply message, the client terminal further needs to generate a response value. The enable response message carries the response value and is sent to the server terminal. The server terminal needs to verify the enable response message.

After step ③, this embodiment further includes the following steps:
selecting, by the client terminal, a signature algorithm according to the challenge value included in the enable request reply message, and generating a user public and private key pair, where the saved enable record includes the user private key;
signing the enable response message by using the selected signature algorithm and an agreed second private key, where the enable response message includes the generated user public key; and
likewise, verifying the enable response message by using a signature algorithm selected according to the challenge value and an agreed second public key, and saving a user record including the user public key after the verification succeeds or reporting an error if the verification fails.

When the signature algorithm is selected according to the received challenge value, there are, for example, four signature algorithms that can be selected, which are a signature algorithm 1, a signature algorithm 2, a signature algorithm 3, and a signature algorithm 4 respectively. The algorithm may be selected according to a remainder obtained after dividing of the challenge value. If the reminder is 0 after the challenge value is divided by 4, the signature algorithm 1 is selected. If the remainder is 1, the signature algorithm 2 is selected. The rest may be deduced by analogy.

The specific signature algorithm may be a Secure Hash Algorithm such as RAS-SHA1 or RSA-SHA256. The foregoing signature algorithm corresponds to a uniform user public and private key generation algorithm. A pair of user public and private keys is generated when the verification function is enabled, and is used for encryption and decryption in subsequent fingerprint verification. Thus, each user has his/her own user public and private key pair, where the user public and private key pair includes a user private key and a user public key.

Before the enable response message is sent, in this embodiment, the enable response message is signed by using the selected signature algorithm and the agreed second private key. Herein, the second private key is determined by hardware of the client terminal. Correspondingly, the server terminal has a corresponding second public key.

It should be noted that, the algorithm is selected according to a remainder obtained after dividing of the challenge value in this embodiment. The algorithm may also be selected directly according to the ones-place digit and the tens-place digit of the challenge value, or according to a value obtained by dividing the challenge value by 4. The present invention does not limit a specific selection manner.

The process of verifying the enable response message by the server includes the following two verification steps:
1) The signature is verified by using the second public key and the signature algorithm.
   At the server terminal, the challenge value is divided by using a method the same as that used by the client terminal to obtain a remainder. A corresponding signature algorithm is selected, and the signed response message is verified according to the agreed second public key.
2) A response value is calculated by using an algorithm the same as that used by the client terminal, and verification is performed by comparing the obtained response value with a response value in the response message.

In a fingerprint verification process, after receiving the enable request reply message, the client terminal needs to make a response and returns a response message to the server terminal. The response message includes a response value which is calculated by using a fixed algorithm according to the challenge value, so that the server terminal calculates a response value according to the same algorithm, and then performs verification by comparing the response values. In this way, after the verification succeeds, the server terminal saves a corresponding user record. The user record saved by the server terminal includes a user ID, a device ID, a user public key, and a fingerprint template ID, so that result verification is performed in the subsequent verification process.

In this embodiment, the enable request reply message includes a user ID and a challenge value. The enable record includes a user private key, the user ID, and a fingerprint template ID.

The enable response message includes a user public key, the user ID, a device ID, and the fingerprint template ID. The user record saved by the server terminal includes the user ID, the device ID, the fingerprint template ID, and the user public key.

### Embodiment 2: Fingerprint authentication process during use by a user

When the user uses the Internet payment, a fingerprint of the user needs to be verified. As shown in FIG. 2, the following steps are performed:
(1) A client terminal sends an authentication request to a server terminal, and the server terminal acquires the authentication request from the client terminal.
(2) After receiving the authentication request, the server terminal sends an authentication request reply message to the client terminal.
(3) After receiving the authentication request reply message, the client terminal receives a fingerprint image used for verification and input by the user, acquires a fingerprint template ID corresponding to the fingerprint image used for verification, and compares the fingerprint template ID with a fingerprint template ID in an enable record saved by the client terminal. A next step is performed if the two fingerprint template IDs are consistent, otherwise an error is reported.

During fingerprint verification in a payment process, the user only needs to put a finger used for payment on a fingerprint scanner according to a prompt interface, and input a fingerprint image used for verification. The client terminal finds a corresponding fingerprint template from stored fingerprint templates, acquires the fingerprint template ID, finds a corresponding enable record according to a user ID, and compares the acquired fingerprint template ID with a fingerprint template in the enable record. If the acquired fingerprint template ID is consistent with that in the enable record, the verification succeeds, otherwise an error is reported and the verification fails.

For example, if the user uses an index finger when the fingerprint verification function is enabled, the enable record saves a fingerprint template ID of the "index finger". During verification, it is first identified whether a fingerprint template ID corresponding to a fingerprint input by the user to the terminal is the fingerprint template ID of the "index finger", that is, whether the fingerprint template ID is consistent with the fingerprint template ID saved in the
enable record.

In this embodiment, the fingerprint template IDs are compared locally at the client terminal. It is unnecessary to transmit the fingerprint of the user via a network, thus avoiding leakage of a biometric feature of the user.
(1) The client terminal generates an authentication response message including the acquired fingerprint template ID, and sends the authentication response message to the server terminal.
(2) The server terminal receives the authentication response message, and compares the fingerprint template ID included in the message with the fingerprint template ID in the locally saved corresponding user record. The verification succeeds if the fingerprint template IDs are consistent, otherwise an error is reported.

In the fingerprint authentication process of this embodiment, after performing the fingerprint verification, the client terminal only needs to send the fingerprint template ID instead of the fingerprint template to the server terminal. The server terminal compares the fingerprint template ID again with the fingerprint template ID in the user record. The fingerprint authentication is further performed through the two comparisons, thus achieving higher security. In addition, transmission of the fingerprint template ID consumes low transmission traffic in a transmission process, and a computation amount of the server terminal is also small.

Similar to Embodiment 1, the authentication request reply message includes a user ID, so as to distinguish between users and between terminal devices of the users. Thus, the client terminal locally searches for the corresponding enable record according to the user ID, and compares the acquired fingerprint template ID with the fingerprint template ID in the enable record. In addition, the authentication response message includes a device ID, the user ID, and the fingerprint template ID. The server terminal finds the corresponding user record according to the authentication response message, and compares the fingerprint template ID with that in the locally saved corresponding user record. If the fingerprint template IDs are consistent, it is considered that the verification succeeds and the verification process ends; otherwise, an error is reported and the verification fails.

Similar to Embodiment 1, in Embodiment 2, the authentication request reply message may also be encrypted by using a first private key. Then, the client terminal decrypts the message and verifies it by using a first public key.

It should be noted that, in an authentication process of fingerprint verification, this embodiment still performs verification based on a challenge-response manner. Likewise, the authentication request reply message includes a challenge value. The client terminal selects a signature algorithm according to the challenge value. A key used in the signature algorithm may be a second private key. In this case, the server terminal performs verification by using a second public key.

Preferably, the authentication response message is signed by using a user private key in the enable record. The server terminal also selects a signature algorithm according to the challenge value, and verifies the authentication response message by using a user public key in the user record. The verification process is same as the verification process of the response message in Embodiment 1, only that the used keys are different. In Embodiment 1, the second public key is used to perform verification, while in Embodiment 2, the user public key is used to perform verification. Because the user public and private key pair is unique to each user, the security in the verification process is further ensured.

That is, the client terminal selects a signature algorithm according to the challenge value, and signs the authentication response message by using the selected signature algorithm and the user private key. After receiving the authentication response message, the server terminal also selects a signature algorithm according to the challenge value and verifies the authentication response message by using the signature algorithm and the user public key.

Different from Embodiment 1, the authentication request reply message in this step further includes service information, so that the client terminal displays the service information after receiving the authentication request reply message. The user may judge, according to the displayed service information, whether the service is a service corresponding to the fingerprint authentication that the user is currently performing. If yes, the user selects to continue the
operation, otherwise the user may give up the fingerprint authentication.

In both the enable process and the subsequent verification process, the present invention selects the signature algorithm according to a random number. However, the number of signature algorithms selected to make a signature is not limited to one, and a combination of multiple algorithms may also be selected to perform a signing operation, thus increasing variety of the
algorithms. For example, two signature algorithms are selected according to the ones-place digit and the tens-place digit of the random number. The signature security is further enhanced through two successive signing operations. In this embodiment, because a random signature algorithm is used for the signature verification on the response message, an attacker does not know the signature algorithm even if the user private key is leaked, and cannot counterfeit the response
message.

In the prior art, a verification solution proposed by the Fast Identity Online (FIDO) alliance includes a password, a webpage plug-in, and verification hardware. There is a variety of verification hardware, for example, a USB flash disk (or a USB key), a Near Field Communication (NFC) chip, a Trusted Platform Module (TPM) chip, and biometric recognition
hardware such as a fingerprint scanner, voice recognition hardware, face recognition hardware,
and iris recognition hardware. By using the verification method proposed by the FIDO alliance, a user password will not be sent out, but is processed by using software inside a device such as a mobile phone or a computer. After verification succeeds, the software sends a key to a login server, and no login information is saved. At the same time, the login server sends the key to user equipment to notify that it has "passed the authentication". If an enterprise intends to use the authentication manner of the FIDO alliance, it is only required to install verification software on
a server, and then installs corresponding plug-in or application program on devices of clients and staff. However, using fingerprint verification as an example, enabling of the fingerprint verification proposed by the FIDO alliance can only be bound to a device. That is, after fingerprint verification is enabled, all fingerprint templates on the device can be used to complete the fingerprint verification. A fingerprint template added after the fingerprint verification is
enabled can also be used to complete the verification. However, generally, it is only required to input a simple password (for example, a 4-digit password) to add a fingerprint template. This becomes a security weakness, causing a security hole. Moreover, a message from the server terminal has no signature, and therefore, modules at a device end may be attacked via a counterfeit message. However, in the present invention, an enable record and a user record are
stored in an enable process, and a fingerprint template ID used for fingerprint verification cannot be modified subsequently, thus avoiding that a fingerprint template is added after the fingerprint verification is enabled. In addition, a signature algorithm is selected by using a challenge value, and a signature is added in a verification process, thus avoiding an attack via a counterfeit message.

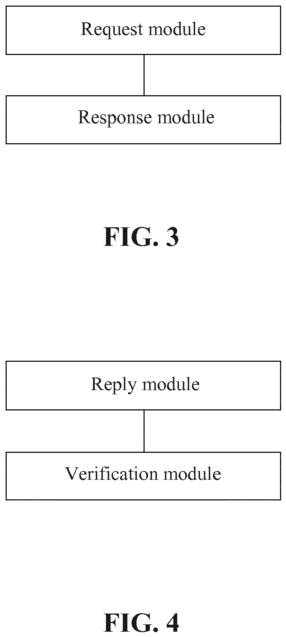

As shown in FIG. 3, the present invention further provides a client terminal, which is applied to an identity authentication system. The identity authentication system fmiher includes a server terminal. The client terminal saves an enable record, and the server terminal saves a user record. The enable record and the user record both include a biometric feature template ID which is used for biometric feature verification and is acquired in a process of enabling the biometric feature
verification. The client terminal includes:
a request module configured to send an authentication request to the server terminal, and receive an authentication request reply message returned by the server terminal; and
a response module configured to receive a biometric feature input by a user; acquire a biometric feature template ID corresponding to the biometric feature; compare the acquired biometric feature template ID with the biometric feature template ID in the locally saved enable record; and generate an authentication response message including the acquired biometric
   feature template ID if the two biometric feature template IDs are consistent, and send the authentication response message to the server terminal, so that the server terminal receives the authentication response message and performs verification by comparing the biometric feature template ID with the biometric feature template ID in the locally saved user record; or report an error if the two biometric feature template IDs are inconsistent.

Further, the request module is further configured to send an enable request for enabling the biometric feature verification to the server terminal, and receive an enable request reply message returned by the server terminal. The response module is further configured to receive the biometric feature used for verification and input by the user, acquire the biometric feature template ID corresponding to the biometric feature used for verification, generate and save the
enable record, generate an enable response message including the biometric feature template ID, and send the enable response message to the server terminal, so that the server terminal receives the enable response message, acquires the biometric feature template ID included in the message, and generates and saves the user record.

Further, the server terminal signs the authentication request reply message or the enable request reply message by using an agreed first private key, and then after receiving the authentication request reply message, the request module is further configured to verify the received authentication request reply message by using an agreed first public key, where a subsequent response is made only when the verification succeeds, otherwise an error is reported. After receiving the enable request reply message, the request module is further configured to
verify the received enable request reply message by using the agreed first public key, where a subsequent response is made only when the verification succeeds, otherwise an error is reported.

In the present invention, the enable request reply message carries a challenge value. The response module is further configured to generate a user public and private key pair including a user private key and a user public key, and save the user private key; and select a signature algorithm according to the challenge value in the enable request reply message, and sign the generated enable response message by using the selected signature algorithm and an agreed
second private key and then send the signed enable response message to the server terminal. The enable response message includes the user public key, so that the server terminal receives the enable response message and verifies the enable response message by using the agreed second public key, the user public key being saved in the server terminal.

Further, the authentication request reply message carries a challenge value. The response module is further configured to select a signature algorithm according to the challenge value, and sign the authentication response message by using the selected signature algorithm and the user private key, so that the server terminal also selects a signature algorithm according to the challenge value after receiving the authentication response message and verifies the
authentication response message by using the signature algorithm and the user public key.

Further, the enable request reply message further includes a user ID. The response module is further configured to save the user ID in the enable record. The generated enable response message further includes the user ID, so that after receiving the enable response message, the server terminal acquires the user ID therein and saves the user ID in the user record.

Further, the enable response message further includes a client terminal device ID, so that after receiving the enable request reply message, the server terminal acquires the device ID therein and saves the device ID in the user record.

Further, the authentication request reply message further includes the user ID. After receiving the biometric feature input by the user and acquiring the biometric feature template ID corresponding to the biometric feature, the response module is further configured to search for the corresponding enable record according to the user ID, so as to compare the acquired biometric feature template ID with the biometric feature template ID in the found enable record. The authentication response message generated by the response module further includes the user ID, so that after receiving the authentication response message, the server terminal acquires the user ID therein and searches for the corresponding user record according to the user ID.

Further, the authentication response message further includes a client terminal device ID, so that after receiving the authentication response message, the server terminal acquires the device ID therein and searches for the corresponding user record according to the device ID.

As shown in FIG. 4, the present invention further provides a server corresponding to the foregoing server terminal. The server is applied to an identity authentication system. The identity authentication system further includes a client terminal. The client terminal saves an enable record, and the server saves a user record. The enable record and the user record both include a
biometric feature template ID which is used for biometric feature verification and is acquired in a process of enabling the biometric feature verification. The server terminal includes:
a reply module configured to receive an authentication request from the client terminal, and send an authentication request reply message to the client terminal; and
a verification module configured to receive an authentication response message from the client terminal, where the authentication response message includes a biometric feature template ID; and perform verification by comparing the biometric feature template ID in the authentication response message with the biometric feature template ID in the saved user record, where the verification succeeds if the two biometric feature template IDs are consistent, otherwise an error is reported.

Further, the reply module is further configured to receive an enable request for enabling the biometric feature verification from the client terminal, and send an enable request reply message to the client temlinal, so that the client terminal acquires, according to a biometric feature used for verification and input by a user, a biometric feature template ID corresponding to the biometric feature used for verification, generates an enable record and saves the enable record.
The verification module is further configured to receive an enable response message from the client terminal, acquire the biometric feature template ID included in the enable response message, and generate and save the user record.

Further, the reply module is further configured to sign the authentication request reply message or the enable request reply message by using an agreed first private key, so that the client terminal verifies the received authentication request reply message by using an agreed first public key, where a subsequent response is made only when the verification succeeds, otherwise an error is reported; or the client terminal verifies the received enable request reply message by using an agreed first public key, where a subsequent response is made only when the verification succeeds, otherwise an error is reported.

In the present invention, the enable request reply message carries a challenge value. The client terminal generates a user public and private key pair including a user private key and a user public key and saves the user private key. The verification module is further configured to receive the enable response message signed by the client terminal by using a selected signature algorithm and an agreed second private key, where the signature algorithm is selected by the client terminal according to the challenge value in the enable request reply message, and the enable response message includes a user public key; and also select a signature algorithm according to the challenge value, and verify the enable response message by using a second public key. The user public key is saved in the server terminal.

Further, the verification module is further configured to receive the authentication response message signed by the client terminal by using a selected signature algorithm and the user private key, where the signature algorithm is selected by the client terminal according to the challenge value in the authentication request reply message; and also select a signature algorithm according to the challenge value, and verify the signature on the authentication response message by using the signature algorithm and the user public key.

Further, the enable request reply message further includes a user ID, so that the client terminal saves the user ID in the enable record after receiving the enable request reply message. The enable response message generated by the client terminal further includes the user ID. After receiving the enable response message, the verification module is further configured to acquire the user ID from the enable response message and save the user ID in the user record.

Further, the enable response message further includes a client terminal device ID. After receiving the enable response message, the verification module is further configured to acquire the device ID from the enable response message and save the device ID in the user record.

Further, the authentication request reply message further includes the user ID, so that the client terminal searches for the corresponding enable record according to the user ID, and compares the acquired biometric feature template ID with the biometric feature template ID in the found enable record. The authentication response message generated by the client terminal further includes the user ID. After receiving the authentication response message, the verification module is further configured to acquire the user ID in the authentication response message, and
search for the corresponding user record according to the user ID.

Further, the authentication response message further includes the client terminal device ID. After receiving the authentication response message, the verification module is further configured to acquire the device ID in the authentication response message, and search for the corresponding user record according to the device ID.

## Claims

1. A biometric feature based security verification method performed by a client device in an identity authentication system, wherein the identity authentication system further comprises a server, and wherein the client device saves an enable record comprising a biometric feature template ID which is used for biometric feature verification and is obtained in a process of enabling the biometric feature verification; the security verification method comprising:
sending an authentication request to the server (1);
receiving, from the server, an authentication request reply message comprising a user ID (2);
receiving a biometric feature input by a user (3);
obtaining a biometric feature template ID corresponding to the biometric feature, comprising identifying, from stored biometric feature templates, a biometric feature template that corresponds to the received biometric feature input by the user and obtaining an ID for the identified biometric feature template;
searching for a corresponding saved enable record according to the user ID;
comparing the obtained biometric feature template ID with the biometric feature template ID in the corresponding saved enable record;
generating an authentication response message comprising the obtained biometric feature template ID and user ID if the obtained biometric feature template ID and biometric feature template ID in the corresponding saved enable record are consistent (5); and
sending the authentication response message to the server (6), so that the server receives the authentication response message, obtains the user ID therein, searches for a user record according to the user ID and performs verification.

2. The security verification method of claim 1, wherein the process of enabling the biometric feature verification comprises:
sending an enable request for enabling the biometric feature verification to the server, and receiving an enable request reply message returned by the server;
receiving the biometric feature used for verification and input by the user;
obtaining the biometric feature template ID corresponding to the biometric feature used for verification;
generating and saving the enable record;
generating an enable response message comprising the biometric feature template ID; and
sending the enable response message to the server, so that the server receives the enable response message, obtains the biometric feature template ID comprised in the message, and generates and saves the user record.

3. The security verification method according to claim 2, wherein the server signs the authentication request reply message or the enable request reply message using an agreed first private key, and after the client device receives the authentication request reply message, the method further comprises:
verifying the received authentication request reply message using an agreed first public key, wherein a subsequent response is made only when the verification succeeds, otherwise an error is reported; and
after the client device receives the enable request reply message, the method further comprises:
verifying the received enable request reply message using the agreed first public key, wherein a subsequent response is made only when the verification succeeds, otherwise an error is reported.

4. The security verification method of claim 2, wherein the enable request reply message carries a challenge value, and the process of enabling the biometric feature verification further comprises:
generating a user public and private key pair comprising a user private key and a user public key, and saving the user private key; and
selecting a signature algorithm according to the challenge value in the enable request reply message, and signing the generated enable response message using the selected signature algorithm and an agreed second private key and then sending the signed enable response message to the server, wherein the enable response message comprises the user public key, so that the server receives the enable response message and verifies the enable response message using the agreed second public key, the user public key being saved in the server; and optionally
wherein the authentication request reply message carries a challenge value, and the security verification method further comprises:
selecting a signature algorithm according to the challenge value, and signing the authentication response message using the selected signature algorithm and the user private key, so that the server also selects a signature algorithm according to the challenge value after receiving the authentication response message and verifies the authentication response message using the signature algorithm and the user public key.

5. The security verification method of claim 2, wherein the enable request reply message further comprises a user ID, and after the client device receives the enable request reply message, the method further comprises:
saving the user ID in the enable record, wherein the enable response message generated by the client device further comprises the user ID, so that after receiving the enable response message, the server obtains the user ID therein and saves the user ID in the user record,
optionally wherein the enable response message further comprises a client device ID, so that after receiving the enable request reply message, the server obtains the device ID therein and saves the device ID in the user record, and optionally wherein the authentication response message further comprises the client device ID, so that after receiving the authentication response message, the server obtains the device ID therein and searches for the corresponding user record according to the device ID.

6. A biometric feature based security verification method performed by a server in an identity authentication system, wherein the identity authentication system further comprises a client device, the server saves a user record comprising a biometric feature template ID which is used for biometric feature verification and is obtained in a process of enabling the biometric feature verification; the security verification method comprising:
receiving an authentication request from the client device;
sending an authentication request reply message to the client device, wherein the authentication request reply message comprises a user ID;
receiving an authentication response message from the client device, wherein the authentication response message comprises
a biometric feature template ID and the user ID;
obtaining the user ID from the authentication response message;
searching for a corresponding user record according to the user ID; and
performing verification by comparing the biometric feature template ID in the authentication response message with the biometric feature template ID in the corresponding user record, wherein the verification succeeds if the biometric feature template ID in the authentication response message and the biometric feature template ID in the corresponding user record are consistent, otherwise an error is reported.

7. The security verification method of claim 6, wherein the security verification method further comprises:
signing the authentication request reply message or the enable request reply message using an agreed first private key, so that the client device verifies the received authentication request reply message using an agreed first public key, wherein a subsequent response is made only when the verification succeeds, otherwise an error is reported; or the client device verifies the received enable request reply message using an agreed first public key, wherein a subsequent response is made only when the verification succeeds, otherwise an error is reported.

8. The security verification method of claim 6, wherein the enable request reply message carries a challenge value; the client device generates a user public and private key pair comprising a user private key and a user public key and saves the user private key; and the process of enabling the biometric feature verification further comprises:
receiving an enable response message signed by the client device using a selected signature algorithm and an agreed second private key, wherein the signature algorithm is selected by the client device according to the challenge value in the enable request reply message, and the enable response message comprises a user public key; also selecting a signature algorithm according to the challenge value, and verifying the enable response message using a second public key, the user public key being saved in the server.

9. The security verification method of claim 8, wherein the security verification method further comprises:
receiving the authentication response message signed by the client device using a selected signature algorithm and the user private key, wherein the signature algorithm is selected by the client device according to the challenge value in the authentication request reply message; and also selecting a signature algorithm according to the challenge value, and verifying the signature on the authentication response message using the signature algorithm and the user public key.

10. The security verification method of claim 8, wherein the enable response message further comprises a client device ID, and after the server receives the enable response message, the method further comprises:
obtaining the device ID from the enable response message, and saving the device ID in the user record.

11. The security verification method of claim 9, wherein the authentication response message further comprises the client device ID, and after the server receives the authentication response message, the method further comprises:
obtaining the device ID from the authentication response message, and searching for the corresponding user record according to the device ID.

12. A client device, applied to an identity authentication system, wherein the identity authentication system further comprises a server, the client device saves an enable record, and the enable record comprises a biometric feature template ID which is used for biometric feature verification and is obtained in a process of enabling the biometric feature verification; the client device comprising:
multiple modules configured to perform operations according to the method of any one of claims 1 to 5.

13. A server, applied to an identity authentication system, wherein the identity authentication system further comprises a client device, the server saves a user record, and the user record comprises a biometric feature template ID which is used for biometric feature verification and is obtained in a process of enabling the biometric feature verification; the server comprising:
multiple modules configured to perform operations according to the method of any one of claims 6 to 11.

## Patentansprüche

1. Auf biometrischen Merkmalen basierendes Sicherheitsüberprüfungsverfahren, das von einem Clientgerät in einem Identitätsauthentifizierungssystem durchgeführt wird, wobei das Identitätsauthentifizierungssystem ferner einen Server umfasst und wobei das Clientgerät einen Aktivierungsdatensatz speichert, der eine biometrische Merkmalsvorlagen-ID umfasst, die zur biometrischen Merkmalsüberprüfung verwendet wird und in einem Prozess zum Aktivieren der biometrischen Merkmalsüberprüfung erhalten wird;
wobei das Sicherheitsüberprüfungsverfahren umfasst:
Senden einer Authentifizierungsanforderung an den Server (1);
Empfangen, von dem Server, einer Authentifizierungsanforderungs-Antwortnachricht, die eine Benutzer-ID umfasst (2);
Empfangen einer biometrischen Merkmalseingabe durch einen Benutzer (3);
Erhalten einer biometrischen Merkmalsvorlagen-ID, die dem biometrischen Merkmal entspricht, umfassend das Identifizieren, aus gespeicherten biometrischen Merkmalsvorlagen, einer biometrischen Merkmalsvorlage, die der von dem Benutzer empfangenen biometrischen Merkmalseingabe entspricht, und Erhalten einer ID für die identifizierte biometrische Merkmalsvorlage;
Suchen nach einem entsprechenden gespeicherten Aktivierungsdatensatz gemäß der Benutzer-ID;
Vergleichen der erhaltenen biometrischen Merkmalsvorlagen-ID mit der biometrischen Merkmalsvorlagen-ID in dem entsprechenden gespeicherten Aktivierungsdatensatz;
Erzeugen einer Authentifizierungsantwortnachricht, die die erhaltene biometrische Merkmalsvorlagen-ID und Benutzer-ID umfasst, wenn die erhaltene biometrische Merkmalsvorlagen-ID und die biometrische Merkmalsvorlagen-ID in dem entsprechenden gespeicherten Aktivierungsdatensatz konsistent sind (5); und
Senden der Authentifizierungsantwortnachricht an den Server (6), so dass der Server die Authentifizierungsantwortnachricht empfängt, die darin enthaltene Benutzer-ID erhält, nach einem Benutzerdatensatz gemäß der Benutzer-ID sucht und eine Überprüfung durchführt.

2. Sicherheitsüberprüfungsverfahren nach Anspruch 1, wobei der Prozess zum Aktivieren der biometrischen Merkmalsüberprüfung umfasst:
Senden einer Aktivierungsanforderung zum Aktivieren der biometrischen Merkmalsüberprüfung an den Server und Empfangen einer von dem Server zurückgegebenen Aktivierungsanforderungs-Antwortnachricht;
Empfangen des biometrischen Merkmals, das zur Überprüfung und Eingabe durch den Benutzer verwendet wird;
Erhalten der biometrischen Merkmalsvorlagen-ID, die dem zur Verifizierung verwendeten biometrischen Merkmal entspricht;
Erzeugen und Speichern des Aktivierungsdatensatzes;
Erzeugen einer Aktivierungsantwortnachricht, die die biometrische Merkmalsvorlagen-ID umfasst; und
Senden der Aktivierungsantwortnachricht an den Server, sodass der Server die Aktivierungsantwortnachricht empfängt, die in der Nachricht enthaltene biometrische Merkmalsvorlagen-ID erhält und den Benutzerdatensatz erzeugt und speichert.

3. Sicherheitsüberprüfungsverfahren nach Anspruch 2, wobei der Server die Authentifizierungsanforderungs-Antwortnachricht oder die Aktivierungsanforderungs-Antwortnachricht unter Verwendung eines vereinbarten ersten privaten Schlüssels signiert, und wobei, nachdem das Clientgerät die Authentifizierungsanforderungs-Antwortnachricht empfangen hat, das Verfahren ferner umfasst:
Überprüfen der empfangenen Authentifizierungsanforderungs-Antwortnachricht unter Verwendung eines vereinbarten ersten öffentlichen Schlüssels, wobei eine nachfolgende Antwort nur erfolgt, wenn die Überprüfung erfolgreich ist, und wobei andernfalls ein Fehler gemeldet wird; und wobei,
nachdem das Clientgerät die Aktivierungsanforderungs-Antwortnachricht empfangen hat, das Verfahren ferner umfasst:
Überprüfen der empfangenen Aktivierungsanforderungs-Antwortnachricht unter Verwendung des vereinbarten ersten öffentlichen Schlüssels, wobei eine nachfolgende Antwort nur erfolgt, wenn die Überprüfung erfolgreich ist, und wobei andernfalls ein Fehler gemeldet wird.

4. Sicherheitsüberprüfungsverfahren nach Anspruch 2, wobei die Aktivierungsanforderungs-Antwortnachricht einen Abfragewert trägt und der Prozess zum Aktivieren der biometrischen Merkmalsüberprüfung ferner umfasst:
Erzeugen eines öffentlichen und privaten Benutzerschlüsselpaars, umfassend einen privaten Benutzerschlüssel und einen öffentlichen Benutzerschlüssel, und Speichern des privaten Benutzerschlüssels; und
Auswählen eines Signaturalgorithmus gemäß dem Abfragewert in der Aktivierungsanforderungs-Antwortnachricht und Signieren der erzeugten Aktivierungsantwortnachricht unter Verwendung des ausgewählten Signaturalgorithmus und eines vereinbarten zweiten privaten Schlüssels und anschließendes Senden der signierten Aktivierungsantwortnachricht an den Server, wobei die Aktivierungsantwortnachricht den öffentlichen Benutzerschlüssel umfasst, so dass der Server die Aktivierungsantwortnachricht empfängt und die Aktivierungsantwortnachricht unter Verwendung des vereinbarten zweiten öffentlichen Schlüssels überprüft, wobei der öffentliche Benutzerschlüssel auf dem Server gespeichert wird; und
wobei optional die Authentifizierungsanforderungs-Antwortnachricht einen Abfragewert trägt und das Sicherheitsüberprüfungsverfahren ferner umfasst:
Auswählen eines Signaturalgorithmus gemäß dem Abfragewert und Signieren der Authentifizierungsantwortnachricht unter Verwendung des ausgewählten Signaturalgorithmus und des privaten Benutzerschlüssels, so dass der Server nach Empfang der Authentifizierungsantwortnachricht außerdem einen Signaturalgorithmus gemäß dem Abfragewert auswählt und die Authentifizierungsantwortnachricht unter Verwendung des Signaturalgorithmus und des öffentlichen Benutzerschlüssels überprüft.

5. Sicherheitsüberprüfungsverfahren nach Anspruch 2, wobei die Aktivierungsanforderungs-Antwortnachricht ferner eine Benutzer-ID umfasst, und, nachdem das Clientgerät die Aktivierungsanforderungs-Antwortnachricht empfangen hat, das Verfahren ferner umfasst:
Speichern der Benutzer-ID in dem Aktivierungsdatensatz, wobei die von dem Clientgerät erzeugte Aktivierungsantwortnachricht ferner die Benutzer-ID umfasst, so dass der Server nach dem Empfang der Aktivierungsantwortnachricht die darin enthaltene Benutzer-ID erhält und die Benutzer-ID im Benutzerdatensatz speichert, wobei optional die Aktivierungsantwortnachricht ferner eine Clientgeräte-ID umfasst, so dass der Server nach dem Empfang der Aktivierungsanforderungs-Antwortnachricht die darin enthaltene Geräte-ID erhält und die Geräte-ID im Benutzerdatensatz speichert, und wobei optional die Authentifizierungsantwortnachricht ferner die Clientgeräte-ID umfasst, sodass der Server nach dem Empfang der Authentifizierungsantwortnachricht die darin enthaltene Geräte-ID erhält und nach dem entsprechenden Benutzerdatensatz gemäß der Geräte-ID sucht.

6. Auf biometrischen Merkmalen basierendes Sicherheitsüberprüfungsverfahren, das von einem Server in einem Identitätsauthentifizierungssystem durchgeführt wird, wobei das Identitätsauthentifizierungssystem ferner ein Clientgerät umfasst, der Server einen Benutzerdatensatz speichert, der eine biometrische Merkmalsvorlagen-ID umfasst, die zur biometrischen Merkmalsüberprüfung verwendet wird und in einem Prozess zum Aktivieren der biometrischen Merkmalsüberprüfung erhalten wird;
wobei das Sicherheitsüberprüfungsverfahren umfasst:
Empfangen einer Authentifizierungsanforderung von dem Clientgerät;
Senden einer Authentifizierungsanforderungs-Antwortnachricht an das Clientgerät, wobei die Authentifizierungsanforderungs-Antwortnachricht eine Benutzer-ID umfasst;
Empfangen einer Authentifizierungsantwortnachricht von dem Clientgerät, wobei die Authentifizierungsantwortnachricht eine biometrische Merkmalsvorlagen-ID und die Benutzer-ID umfasst;
Erhalten der Benutzer-ID aus der Authentifizierungsantwortnachricht;
Suchen nach einem entsprechenden Benutzerdatensatz gemäß der Benutzer-ID; und
Durchführen einer Verifizierung durch Vergleichen der biometrischen Merkmalsvorlagen-ID in der Authentifizierungsantwortnachricht mit der biometrischen Merkmalsvorlagen-ID in dem entsprechenden Benutzerdatensatz, wobei die Verifizierung erfolgreich ist, wenn die biometrische Merkmalsvorlagen-ID in der Authentifizierungsantwortnachricht und die biometrische Merkmalsvorlagen-ID in dem entsprechenden Benutzerdatensatz konsistent sind, und wobei andernfalls ein Fehler gemeldet wird.

7. Sicherheitsüberprüfungsverfahren nach Anspruch 6, wobei das Sicherheitsüberprüfungsverfahren ferner umfasst:
Signieren der Authentifizierungsanforderungs-Antwortnachricht oder der Aktivierungsanforderungs-Antwortnachricht unter Verwendung eines vereinbarten ersten privaten Schlüssels, so dass das Clientgerät die empfangene Authentifizierungsanforderungs-Antwortnachricht unter Verwendung eines vereinbarten ersten öffentlichen Schlüssels überprüft, wobei eine nachfolgende Antwort nur erfolgt, wenn die Überprüfung erfolgreich ist, und wobei andernfalls ein Fehler gemeldet wird; oder
wobei das Clientgerät die empfangene Aktivierungsanforderungs-Antwortnachricht unter Verwendung eines vereinbarten ersten öffentlichen Schlüssels überprüft, wobei eine nachfolgende Antwort nur erfolgt, wenn die Überprüfung erfolgreich ist, und wobei andernfalls ein Fehler gemeldet wird.

8. Sicherheitsüberprüfungsverfahren nach Anspruch 6, wobei die Aktivierungsanforderungs-Antwortnachricht einen Abfragewert trägt;
das Clientgerät ein öffentliches und privates Benutzerschlüsselpaar erzeugt, umfassend einen privaten Benutzerschlüssel und einen öffentlichen Benutzerschlüssel, und den privaten Benutzerschlüssels speichert; und
der Prozess zum Aktivieren der biologischen Merkmalsüberprüfung ferner umfasst:
Empfangen einer vom Clientgerät signierten Aktivierungsantwortnachricht unter Verwendung eines ausgewählten Signaturalgorithmus und eines vereinbarten zweiten privaten Schlüssels, wobei der Signaturalgorithmus vom Clientgerät gemäß dem Abfragewert in der Aktivierungsanforderungs-Antwortnachricht ausgewählt wird und die Aktivierungsantwortnachricht einen öffentlichen Benutzerschlüssel umfasst;
außerdem Auswählen eines Signaturalgorithmus gemäß dem Abfragewert und Überprüfen der Aktivierungsantwortnachricht unter Verwendung eines zweiten öffentlichen Schlüssels, wobei der öffentliche Benutzerschlüssel auf dem Server gespeichert wird.

9. Sicherheitsüberprüfungsverfahren nach Anspruch 8, wobei das Sicherheitsüberprüfungsverfahren ferner umfasst:
Empfangen der vom Clientgerät signierten Authentifizierungsantwortnachricht unter Verwendung eines ausgewählten Signaturalgorithmus und des privaten Benutzerschlüssels, wobei der Signaturalgorithmus vom Clientgerät gemäß dem Abfragewert in der Authentifizierungsanforderungs-Antwortnachricht ausgewählt wird; und außerdem Auswählen eines Signaturalgorithmus gemäß dem Abfragewert und Überprüfen der Signatur in der Authentifizierungsantwortnachricht unter Verwendung des Signaturalgorithmus und des öffentlichen Benutzerschlüssels.

10. Sicherheitsüberprüfungsverfahren nach Anspruch 8, wobei die Aktivierungsantwortnachricht ferner eine Clientgeräte-ID umfasst, und wobei, nachdem der Server die Aktivierungsantwortnachricht empfangen hat, das Verfahren ferner umfasst:
Erhalten der Geräte-ID aus der Aktivierungsantwortnachricht und Speichern der Geräte-ID im Benutzerdatensatz.

11. Sicherheitsüberprüfungsverfahren nach Anspruch 9, wobei die Authentifizierungsantwortnachricht ferner die Clientgeräte-ID umfasst, und wobei, nachdem der Server die Authentifizierungsantwortnachricht empfangen hat, das Verfahren ferner umfasst:
Erhalten der Geräte-ID aus der Authentifizierungsantwortnachricht und Suchen nach dem entsprechenden Benutzerdatensatz gemäß der Geräte-ID.

12. Clientgerät, das in einem Identitätsauthentifizierungssystem angewendet wird, wobei das Identitätsauthentifizierungssystem ferner einen Server umfasst, das Clientgerät einen Aktivierungsdatensatz speichert und der Aktivierungsdatensatz eine biometrische Merkmalsvorlagen-ID umfasst, die zur biometrischen Merkmalsüberprüfung verwendet wird und in einem Prozess zum Aktivieren der biometrischen Merkmalsüberprüfung erhalten wird;
wobei das Clientgerät umfasst:
mehrere Module, die konfiguriert sind, um Operationen nach dem Verfahren nach einem der Ansprüche 1 bis 5 durchzuführen.

13. Server, der in einem Identitätsauthentifizierungssystem angewendet wird, wobei das Identitätsauthentifizierungssystem ferner ein Clientgerät umfasst, der Server einen Benutzerdatensatz speichert und der Benutzerdatensatz eine biometrische Merkmalsvorlagen-ID umfasst, die zur biometrischen Merkmalsüberprüfung verwendet wird und in einem Prozess zum Aktivieren der biometrischen Merkmalsüberprüfung erhalten wird;
wobei der Server umfasst:
mehrere Module, die konfiguriert sind, um Operationen nach dem Verfahren nach einem der Ansprüche 6 bis 11 durchzuführen.

## Revendications

1. Procédé de vérification de sécurité sur base de caractéristiques biométriques exécuté par un dispositif client dans un système d'authentification d'identité, dans lequel le système d'authentification d'identité comprend en outre un serveur, et dans lequel le dispositif client sauvegarde un enregistrement d'activation comprenant un ID de modèle de caractéristique biométrique qui est utilisé pour la vérification de caractéristique biométrique et est obtenu dans un processus d'activation de la vérification de caractéristique biométrique ;
le procédé de vérification de sécurité comprenant :
l'envoi d'une demande d'authentification au serveur (1) ;
la réception, en provenance du serveur, d'un message de réponse de demande d'authentification comprenant un ID utilisateur (2) ;
la réception d'une caractéristique biométrique saisie par un utilisateur (3) ;
l'obtention d'un ID de modèle de caractéristique biométrique correspondant à la caractéristique biométrique, comprenant l'identification, à partir de modèles de caractéristique biométrique stockés, d'un modèle de caractéristique biométrique qui correspond à la saisie par l'utilisateur de caractéristique biométrique reçue et l'obtention d'un ID pour le modèle de caractéristique biométrique identifié ;
la recherche d'un enregistrement d'activation sauvegardé correspondant en fonction de l'ID utilisateur ;
la comparaison de l'ID de modèle de caractéristique biométrique obtenu avec l'ID de modèle de caractéristique biométrique dans l'enregistrement d'activation sauvegardé correspondant ;
la génération d'un message de réponse d'authentification comprenant l'ID de modèle de caractéristique biométrique et l'ID utilisateur obtenus si l'ID de modèle de caractéristique biométrique obtenu et l'ID de modèle de caractéristique biométrique dans l'enregistrement d'activation sauvegardé correspondant sont cohérents (5) ; et
l'envoi du message de réponse d'authentification au serveur (6), de sorte que le serveur reçoit le message de réponse d'authentification, obtient l'ID utilisateur qu'il contient, recherche un enregistrement utilisateur en fonction de l'ID utilisateur et effectue la vérification.

2. Procédé de vérification de sécurité selon la revendication 1, dans lequel le processus d'activation de la vérification de caractéristique biométrique comprend :
l'envoi d'une demande d'activation pour activer la vérification de caractéristique biométrique au serveur, et la réception d'un message de réponse de demande d'activation renvoyé par le serveur ;
la réception de la caractéristique biométrique utilisée pour la vérification et saisie par l'utilisateur ;
l'obtention de l'ID de modèle de caractéristique biométrique correspondant à la caractéristique biométrique utilisée pour la vérification ;
la génération et la sauvegarde de l'enregistrement d'activation ;
la génération d'un message de réponse d'activation comprenant l'ID de modèle de caractéristique biométrique ; et
l'envoi du message de réponse d'activation au serveur, de sorte que le serveur reçoit le message de réponse d'activation, obtient l'ID de modèle de caractéristique biométrique contenu dans le message, et génère et sauvegarde l'enregistrement utilisateur.

3. Procédé de vérification de sécurité selon la revendication 2, dans lequel le serveur signe le message de réponse de demande d'authentification ou le message de réponse de demande d'activation à l'aide d'une première clé privée convenue, et après la réception par le dispositif client du message de réponse de demande d'authentification, le procédé comprend en outre :
la vérification du message de réponse de demande d'authentification reçu à l'aide d'une première clé publique convenue, une réponse ultérieure n'étant effectuée que lorsque la vérification réussit, sinon une erreur est signalée ; et
après la réception par le dispositif client du message de réponse de demande d'activation, le procédé comprend en outre :
la vérification du message de réponse de demande d'activation reçu à l'aide de la première clé publique convenue, une réponse ultérieure n'étant effectuée que lorsque la vérification réussit, sinon une erreur est signalée.

4. Procédé de vérification de sécurité selon la revendication 2, dans lequel le message de réponse de demande d'activation porte une valeur de défi, et le processus d'activation de la vérification de caractéristique biométrique comprend en outre :
la génération d'une paire de clés publique et privée d'utilisateur comprenant une clé privée d'utilisateur et une clé publique d'utilisateur, et la sauvegarde de la clé privée d'utilisateur ; et
la sélection d'un algorithme de signature en fonction de la valeur de défi dans le message de réponse de demande d'activation, et la signature du message de réponse d'activation généré à l'aide de l'algorithme de signature sélectionné et une seconde clé privée convenue, puis l'envoi du message de réponse d'activation signé au serveur, le message de réponse d'activation comprenant la clé publique d'utilisateur, de sorte que le serveur reçoit le message de réponse d'activation et vérifie le message de réponse d'activation à l'aide de la seconde clé publique convenue, la clé publique d'utilisateur étant sauvegardée dans le serveur ; et
dans lequel le message de réponse de demande d'authentification portant éventuellement une valeur de défi, et le procédé de vérification de sécurité comprend en outre :
la sélection d'un algorithme de signature en fonction de la valeur de défi, et la signature du message de réponse d'authentification à l'aide de l'algorithme de signature sélectionné et de la clé privée d'utilisateur, de sorte que le serveur sélectionne également un algorithme de signature en fonction de la valeur de défi après la réception du message de réponse d'authentification et vérifie le message de réponse d'authentification à l'aide de l'algorithme de signature et la clé publique d'utilisateur.

5. Procédé de vérification de sécurité selon la revendication 2, dans lequel le message de réponse de demande d'activation comprend en outre un ID utilisateur, et après la réception par le dispositif client du message de réponse de demande d'activation, le procédé comprend en outre :
la sauvegarde de l'ID utilisateur dans l'enregistrement d'activation, le message de réponse d'activation généré par le dispositif client comprenant en outre l'ID utilisateur, de sorte qu'après la réception du message de réponse d'activation, le serveur obtient l'ID utilisateur qu'il contient et sauvegarde l'ID utilisateur dans l'enregistrement utilisateur,
dans lequel le message de réponse d'activation comprend éventuellement en outre un ID de dispositif client, de sorte qu'après la réception du message de réponse de demande d'activation, le serveur obtient l'ID de dispositif qu'il contient et sauvegarde l'ID de dispositif dans l'enregistrement utilisateur, et éventuellement dans lequel le message de réponse d'authentification comprend éventuellement en outre l'ID de dispositif client, de sorte qu'après la réception du message de réponse d'authentification, le serveur obtient l'ID de dispositif qu'il contient et recherche l'enregistrement utilisateur correspondant en fonction de l'ID de dispositif.

6. Procédé de vérification de sécurité sur base de caractéristiques biométriques exécuté par un serveur dans un système d'authentification d'identité, dans lequel le système d'authentification d'identité comprend en outre un dispositif client, le serveur sauvegarde un enregistrement utilisateur comprenant un ID de modèle de caractéristique biométrique qui est utilisé pour la vérification de caractéristique biométrique et est obtenu dans un processus d'activation de la vérification de caractéristique biométrique ;
le procédé de vérification de sécurité comprenant :
la réception d'une demande d'authentification provenant du dispositif client ;
l'envoi d'un message de réponse de demande d'authentification au dispositif client, le message de réponse de demande d'authentification comprenant un ID utilisateur ;
la réception d'un message de réponse d'authentification provenant du dispositif client, le message de réponse d'authentification comprenant un ID de modèle de caractéristique biométrique et l'ID utilisateur ;
l'obtention de l'ID utilisateur provenant du message de réponse d'authentification ;
la recherche d'un enregistrement utilisateur correspondant en fonction de l'ID utilisateur ; et
l'exécution de la vérification en comparant l'ID de modèle de caractéristique biométrique dans le message de réponse d'authentification avec l'ID de modèle de caractéristique biométrique dans l'enregistrement utilisateur correspondant, la vérification réussissant si l'ID de modèle de caractéristique biométrique dans le message de réponse d'authentification et l'ID de modèle de caractéristique biométrique dans l'enregistrement utilisateur correspondant sont cohérents, sinon une erreur est signalée.

7. Procédé de vérification de sécurité selon la revendication 6, dans lequel le procédé de vérification de sécurité comprend en outre :
la signature du message de réponse de demande d'authentification ou du message de réponse de demande d'activation à l'aide d'une première clé privée convenue, de sorte que le dispositif client vérifie le message de réponse de demande d'authentification reçu à l'aide d'une première clé publique convenue, une réponse ultérieure n'étant effectuée que lorsque la vérification réussit, sinon une erreur est signalée ; ou
le dispositif client vérifie le message de réponse de demande d'activation reçu à l'aide d'une première clé publique convenue, une réponse ultérieure n'étant effectuée que lorsque la vérification réussit, sinon une erreur est signalée.

8. Procédé de vérification de sécurité selon la revendication 6, dans lequel le message de réponse de demande d'activation porte une valeur de défi ;
le dispositif client génère une paire de clés publique et privée d'utilisateur comprenant une clé privée d'utilisateur et une clé publique d'utilisateur et sauvegarde la clé privée d'utilisateur ; et
le processus d'activation de la vérification de caractéristique biométrique comprend en outre :
la réception, par le dispositif client, d'un message de réponse d'activation signé à l'aide d'un algorithme de signature sélectionné et d'une seconde clé privée convenue, l'algorithme de signature étant sélectionné par le dispositif client en fonction de la valeur de défi dans le message de réponse de demande d'activation, et le message de réponse d'activation comprenant une clé publique d'utilisateur ;
la sélection en outre d'un algorithme de signature en fonction de la valeur de défi, et la vérification du message de réponse d'activation à l'aide d'une seconde clé publique, la clé publique d'utilisateur étant sauvegardée dans le serveur.

9. Procédé de vérification de sécurité selon la revendication 8, dans lequel le procédé de vérification de sécurité comprend en outre :
la réception, par le dispositif client, du message de réponse d'authentification signé à l'aide d'un algorithme de signature sélectionné et de la clé privée d'utilisateur, l'algorithme de signature étant sélectionné par le dispositif client en fonction de la valeur de défi dans le message de réponse de demande d'authentification ; et
la sélection en outre d'un algorithme de signature en fonction de la valeur de défi, et la vérification de la signature sur le message de réponse d'authentification à l'aide de l'algorithme de signature et de la clé publique d'utilisateur.

10. Procédé de vérification de sécurité selon la revendication 8, dans lequel le message de réponse d'activation comprend en outre un ID de dispositif client, et après la réception par le serveur du message de réponse d'activation, le procédé comprend en outre :
l'obtention de l'ID de dispositif provenant du message de réponse d'activation et la sauvegarde de l'ID de dispositif dans l'enregistrement utilisateur.

11. Procédé de vérification de sécurité selon la revendication 9, dans lequel le message de réponse d'authentification comprend en outre l'ID de dispositif client, et après la réception par le serveur du message de réponse d'authentification, le procédé comprend en outre :
l'obtention de l'ID de dispositif provenant du message de réponse d'authentification et la recherche de l'enregistrement utilisateur correspondant en fonction de l'ID de dispositif.

12. Dispositif client, appliqué à un système d'authentification d'identité, dans lequel le système d'authentification d'identité comprend en outre un serveur, le dispositif client sauvegarde un enregistrement d'activation et l'enregistrement d'activation comprend un ID de modèle de caractéristique biométrique qui est utilisé pour la vérification de caractéristique biométrique et est obtenu dans un processus d'activation de la vérification de caractéristique biométrique ;
le dispositif client comprenant :
plusieurs modules configurés pour effectuer des opérations selon le procédé de l'une quelconque des revendications 1 à 5.

13. Serveur, appliqué à un système d'authentification d'identité, dans lequel le système d'authentification d'identité comprend en outre un dispositif client, le serveur sauvegarde un enregistrement utilisateur et l'enregistrement utilisateur comprend un ID de modèle de caractéristique biométrique qui est utilisé pour la vérification de caractéristique biométrique et est obtenu dans un processus d'activation de la vérification de caractéristique biométrique ;
le serveur comprenant :
plusieurs modules configurés pour effectuer des opérations selon le procédé de l'une quelconque des revendications 6 à 11.
